# FASCICULE DE BREVET EUROPEEN

(11) **EP 2 127 941 B1**
(45) Date de publication et mention de la délivrance du brevet: **08.06.2011**
(21) Numéro de dépôt: 09290364.0
(22) Date de dépôt: 15.05.2009
(51) Int. Cl.: B60N 2/427, B60N 2/42, B64D 11/06

(54) **Dispositif d'absorption de choc et siège comportant un tel dispositif**
Stoßdämpfungsvorrichtung und mit dieser Vorrichtung ausgestatteter Sitz
Shock-absorbing device and seat comprising such a device

(30) Priorité: 22.05.2008 FR 0853339
(43) Date de publication de la demande: 02.12.2009
(73) Titulaire: Société Industrielle et Commerciale de Matériel Aéronautique, 36100 Issoudun (FR)
(72) Inventeur: Cailleteau, Jérémy, 36120 Saint Aout (FR)
(74) Mandataire: Marconnet, Sébastien

(56) Documents cités:
- DE-A1- 19 807 581
- FR-A- 2 904 796
- US-A- 5 219 202
- US-A- 6 053 571

## Description

### DOMAINE TECHNIQUE DE L'INVENTION

L'invention se rapporte à un dispositif d'absorption de choc destiné à un siège pour véhicule de transport, en particulier de choc pouvant survenir au niveau de la tête d'un passager. L'invention concerne également un siège comportant un tel dispositif et en particulier un siège d'avion comportant un tel dispositif.

### ETAT DE LA TECHNIQUE ANTERIEURE

Dans un avion, lors d'un choc, d'une collision ou d'un crash, la tête des passagers est projetée vers l'avant. Lorsque le choc est important, la tête des passagers peut heurter le siège situé devant eux, ce qui provoque de graves blessures aux passagers.

Il est donc avantageux d'avoir des dispositifs permettant d'incliner les dossiers des sièges vers l'avant en cas de choc afin de réduire le choc tête des passagers. Dans ce domaine, on connaît les documents FR2904796 et DE19613506 qui décrivent chacun un dispositif d'absorption de choc comprenant un premier élément se présentant sous la forme d'une plaque présentant un orifice et un second élément inséré dans cet orifice, le premier élément comportant une succession de découpes se succédant suivant une direction de déformation et définissant entre elles une succession de pontets, s'étendant suivant une direction d'allongement transversale à la direction de déformation.

Ces dispositifs permettent bien d'absorber l'énergie d'un choc, mais ils ne permettent pas d'incliner le siège d'un angle important. Par ailleurs, pour avoir une absorption de choc efficace, il est nécessaire d'avoir un grand nombre de découpes, ce qui est coûteux et complexe à réaliser. Par ailleurs, dans ces dispositifs, il est difficile de maîtriser l'effort résistant opposé par le dispositif, en particulier celui-ci peut varier en fonction du comportement des pontets une fois cassés : en effet les pontets cassés gênent le deuxième élément et font varier sa course.

### EXPOSE DE L'INVENTION

L'invention vise à remédier aux inconvénients de l'état de la technique en proposant un dispositif d'absorption de choc permettant d'incliner le dossier d'un siège de véhicule vers l'avant en cas de choc, de manière contrôlée grâce à une cavité de forme adaptée, lorsque le choc dépasse une valeur prédéterminée. Ce dispositif présente en outre l'avantage d'être simple à réaliser et de comprendre un nombre limité de découpes.

Plus précisément, l'invention concerne un dispositif d'absorption de choc, comprenant une plaque et un arbre absorbeur, la plaque comportant une cavité de freinage et un trou au travers duquel passe l'arbre absorbeur, le trou et la cavité de freinage étant séparés par un pontet. Dans ce dispositif d'absorption de choc :
- le trou comporte un logement central dans lequel se trouve l'arbre absorbeur et deux zones d'amorce de cassure, supérieure et inférieure, venant amincir localement le pontet, le pontet étant plus mince au niveau de l'une des deux zones d'amorce de cassure,
- le pontet est dimensionné pour rompre au niveau de la zone d'amorce de cassure la plus mince lorsque l'arbre absorbeur exerce sur lui un effort supérieur à une valeur prédéterminée, et
- la cavité de freinage comporte une cavité centrale, une zone de stockage destinée à recevoir le pontet rompu et une zone déformable s'étendant suivant un axe longitudinal et présentant une largeur inférieure au diamètre de l'arbre absorbeur, la zone déformable étant destinée à recevoir l'arbre absorbeur une fois le pontet rompu.

Ce dispositif d'absorption de choc peut par exemple être intégré à l'articulation d'un dossier de siège pour véhicule, et en particulier à un dossier de siège d'avion. Le siège d'avion comporte de préférence une structure fixe et un dossier monté en liaison pivot sur la structure fixe grâce à un arbre de pivotement fixé sur la structure fixe, autour duquel le dossier peut pivoter.

Pour réaliser l'intégration de l'invention sur le siège d'avion, la plaque est fixée sur le dossier de façon à être solidaire du dossier, tandis que l'arbre absorbeur est fixé sur la structure fixe du siège. Le dossier est lui-même relié à la structure fixe par un arbre de pivotement, autour duquel il peut pivoter.

Ainsi, en fonctionnement normal, l'arbre absorbeur bloque le mouvement de la plaque et donc le dossier ne peut pas pivoter autour de l'arbre de pivotement. En cas de choc, d'une valeur supérieure à une valeur prédéterminée, l'effort exercé par l'arbre absorbeur sur le pontet de la plaque provoque la rupture du pontet au niveau de la zone d'amorce de cassure la plus mince. Le pontet pivote alors au niveau de l'autre zone d'amorce de cassure et vient se loger dans la zone de stockage de la cavité de freinage, si bien que l'arbre absorbeur est libéré du trou. Ainsi, l'arbre absorbeur et la plaque ne sont plus en prise, de sorte que l'arbre absorbeur n'entrave plus le mouvement de l'ensemble plaque/dossier. L'ensemble plaque/dossier peut alors pivoter autour de l'arbre de pivotement, ce qui permet l'inclinaison du dossier vers l'avant.

En effet suite à un choc, le pontet se rompt et, dans un premier temps, le pivotement de l'ensemble plaque/dossier autour de l'arbre de pivotement se fait sans entrave puisque l'arbre absorbeur est dans la cavité centrale de la cavité de freinage. Dans un deuxième temps, l'arbre absorbeur rencontre la zone déformable qui a une largeur inférieure au diamètre de l'arbre absorbeur, si bien que le pivotement de l'ensemble plaque/dossier est freiné lorsque l'arbre absorbeur atteint la zone déformable. L'arbre absorbeur peut progresser dans la zone déformable, puisque l'énergie cinétique du choc, qui anime l'ensemble plaque/dossier, permet à l'arbre absorbeur de déformer les parois de la zone déformable et de progresser dans cette zone. La déformation de la zone déformable permet en outre d'absorber l'énergie cinétique du choc et de ralentir progressivement le pivotement de l'ensemble plaque/dossier. Dans un troisième temps, l'arbre absorbeur arrive en butée à la fin de la zone déformable, ce qui provoque l'arrêt de la rotation de l'ensemble plaque/dossier.

La zone déformable, dont la largeur est inférieure au diamètre de l'arbre absorbeur, arrête la rotation de l'ensemble plaque/dossier, sans nécessiter l'utilisation d'une succession de découpes et de pontets, comme c'était le cas dans l'art antérieur.

Par ailleurs, ce dispositif est simple à réaliser puisque la plaque ne comporte que deux découpes : le trou et la cavité de freinage. En outre, les deux zones d'amorce de cassure réalisent une rupture contrôlée du pontet, et en particulier elles permettent de contrôler l'endroit où le pontet casse et sous quelle charge.

La zone de stockage contient le pontet rompu et évite qu'il ne gêne la rotation de l'ensemble plaque/dossier.

Avantageusement, la plaque est en aluminium.

Dans un mode de réalisation préféré, le pontet est plus mince au niveau de la zone d'amorce de cassure supérieure qu'au niveau de la zone d'amorce de cassure inférieure, la zone de stockage de la cavité de freinage étant localisée en bas de la cavité de freinage. Par conséquent, lorsque la zone d'amorce de cassure supérieure se rompt, le pontet se plie au niveau de la zone d'amorce de cassure inférieure et, grâce à la gravité, il est entraîné vers le bas de la cavité de freinage et donc vers la zone de stockage. Ainsi, le pontet cassé reste dans la zone de stockage et il ne gêne pas le mouvement relatif de la plaque et de l'arbre absorbeur. Par ailleurs, si un utilisateur veut redresser le dossier, il lui suffit de tirer le dossier vers l'arrière et celui-ci se remet en place facilement, puisque l'arbre absorbeur n'est pas gêné par le pontet lors de son retour à la position d'origine. Le redressement du dossier est d'autant plus simple que la zone déformable s'est déformée sous l'action de l'arbre absorbeur et par conséquent, l'axe absorbeur se désengage facilement de la zone déformable.

Suivant différents modes de réalisation:
- l'axe de référence est courbe ;
- la zone déformable est courbe et elle a une longueur et une courbure telle qu'elle permet au dossier de s'incliner d'un angle compris entre 40° et 50° . Cette longueur de zone déformable offre une inclinaison du dossier suffisante pour éviter que la tête du passager ne heurte le dossier, et également un bon amortissement de l'énergie du choc ;
- la zone déformable a une largeur comprise entre 80 et 98% du diamètre de l'arbre absorbeur, ce qui permet à l'arbre absorbeur de pénétrer dans la zone déformable en la déformant ;
- la zone déformable a une largeur décroissante lorsque l'on s'éloigne du pontet en suivant l'axe longitudinal. Ainsi, le mouvement de la plaque autour de l'arbre absorbeur est freiné progressivement ;
- l'extrémité de la zone déformable est élargie car en bout de zone déformable, la plaque n'a plus assez d'énergie cinétique pour se déformer de manière significative en rencontrant l'arbre absorbeur ;
- le logement central du trou est en forme de disque de diamètre sensiblement égal à celui de l'arbre, ce qui permet un bon maintien de l'arbre absorbeur par le trou ;
- pour une rupture optimale du pontet, le logement central présente un centre situé sur l'axe de référence, les deux zones d'amorce de cassure comportant chacune un centre de courbure situé en périphérie du logement central, les deux centres étant séparés d'un angle compris entre 80° et 120° par rapport au centre du logement central ;
- chaque zone d'amorce de cassure est concave, de concavité tournée vers le logement central ;
- le dispositif d'absorption de choc comporte également des moyens de fixation sur une pièce fixe, ainsi que des moyens d'ajustement de l'orientation du dispositif d'absorption par rapport à la pièce à laquelle il est fixé afin de corriger, le cas échéant, les défauts de fabrication des différentes pièces.

L'invention concerne également un siège pour véhicule comportant une structure fixe, un arbre de pivotement fixé sur la structure fixe et un dossier en liaison pivot autour de l'arbre de pivotement, le siège comportant en outre au moins un dispositif absorbeur selon l'un quelconque des modes de réalisation précédents.

Avantageusement, la plaque est solidaire du siège, l'arbre absorbeur étant solidaire de la structure fixe. Ainsi, en cas de choc, l'arbre absorbeur exerce un effort important sur le pontet, ce qui permet de casser le pontet et l'arbre absorbeur est alors libéré du trou dans lequel il était engagé, de sorte que l'ensemble plaque/dossier est libre de pivoter autour de l'arbre de pivotement. Le dossier peut alors s'incliner vers l'avant.

Grâce à ce dispositif, suite à un choc, les dossiers peuvent s'incliner vers l'avant de façon éviter les chocs têtes et à laisser passer une civière au-dessus des sièges en cas de besoin.

Avantageusement, le dossier comporte au moins une bielle dont une extrémité est en liaison pivot autour de l'arbre de pivotement, la plaque étant reliée à la bielle.

L'invention concerne également un siège comportant en outre une assise pouvant translater longitudinalement par rapport à la structure fixe et un dossier mobile en liaison linéaire annulaire par rapport au dossier, le dossier mobile étant en outre en liaison pivot autour d'un arbre libérable par rapport à l'assise, la liaison pivot entre l'assise et le dossier mobile étant réalisée par une chape solidaire de l'assise dans laquelle pivote l'arbre libérable. La chape présente un logement ouvert dans lequel pivote l'arbre libérable, cet arbre étant maintenu par un ressort de torsion libérant l'arbre du logement de la chape lorsque l'arbre absorbeur du dispositif d'absorption sort du trou de la plaque.

Avantageusement, la liaison linéaire annulaire entre le dossier mobile et le dossier est réalisée par un galet solidaire du dossier mobile qui coulisse dans un oblong solidaire du dossier.

Cette liaison pivot entre l'assise et le dossier mobile permet au dispositif absorbeur de choc de fonctionner, même sur un siège pourvu d'un dossier mobile à inclinaison variable. Pour cela, le dossier mobile est solidaire d'un arbre libérable qui pivote dans une chape ouverte solidaire de l'assise. Un ressort de torsion maintient l'arbre libérable dans le logement ouvert de la chape en fonctionnement normal du siège, c'est-à-dire en l'absence de choc. En cas de choc, le dispositif d'absorption de choc se déclenche ce qui provoque la rotation du dossier fixe vers l'avant et le galet vient alors en butée sur le haut du oblong. Ainsi, le dossier mobile est entraîné vers le bas lorsque l'arbre absorbeur du dispositif absorbeur de choc sort du trou, ce qui provoque la libération de l'arbre libérable du logement ouvert de la chape.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en plan d'une plaque d'un dispositif d'absorption selon un mode de réalisation de l'invention;
- la figure 2, une vue en perspective d'une articulation de siège intégrant un dispositif d'absorption selon un mode de réalisation de l'invention;
- la figure 3, une vue en plan de l'articulation de la figure 2 en position normale de fonctionnement ;
- la figure 4, une vue en plan de l'articulation de la figure 2 après un choc ;
- la figure 5, une vue d'une siège intégrant l'articulation des figures 2 à 3 ;
- la figure 6, un diagramme représentant l'évolution de l'effort exercé par l'arbre absorbeur sur le pontet lorsque le dossier s'incline ;
- la figure 7, une vue en perspective d'un siège à dossier mobile comportant un tel dispositif ;
- la figure 8, une vue en perspective du siège de la figure 7 dont le dossier est incliné ;
- la figure 9, une vue en perspective de l'articulation du siège de la figure 7;
- la figure 10, une vue en plan de l'articulation du siège de la figure 7 après inclinaison vers l'avant,
- la figure 11, une vue en plan de la liaison arrière entre le dossier mobile et le dossier fixe dans le siège de la figure 7; et
- la figure 12, une vue en plan de la fixation de l'assise de la figure 7 sur la structure fixe.

Pour plus de clarté, les éléments identiques ou similaires sont repérés par des signes de référence identiques sur l'ensemble des figures.

Par ailleurs, le dispositif d'absorption est destiné à être mis en place sur un siège de véhicule, et les adjectifs « supérieur » et « inférieur », « haut » et « bas », sont utilisés pour désigner la position relative des différents éléments lorsque le dispositif est en place sur le siège. L'adjectif « longitudinal » est utilisé pour désigner la direction parallèle au côté du siège, tandis que l'adjectif « transversal » est utilisé pour désigner la direction parallèle au bord avant (ou arrière) du siège. La plaque est parallèle à un plan qui contient les centres des différentes découpes et l'axe de référence.

### DESCRIPTION DETAILLEE D'UN MODE DE REALISATION

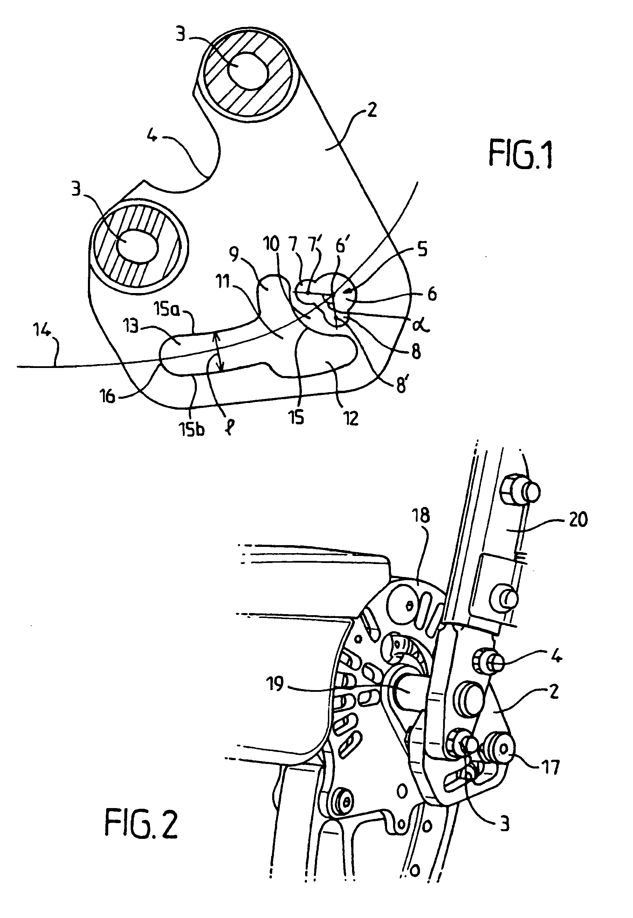

La figure 1 représente une plaque 2, en aluminium, d'un dispositif d'absorption de choc selon un mode de réalisation de l'invention. Cette plaque comporte sur sa partie supérieure deux oblongs 3 et 3' permettant de fixer la plaque 2 à la bielle d'un dossier de siège et d'ajuster l'inclinaison du dispositif de manière à rattraper d'éventuels défauts de fabrication grâce au jeu laissé par les oblongs 3 et 3' sur la plaque. Cet ajustement de l'inclinaison de la plaque est assuré par le serrage des vis et le moletage de la surface de la plaque en contact avec la bielle. La plaque 2 comporte également un évidement 4 permettant de laisser passer un arbre de pivotement.

La plaque 2 comporte une cavité de freinage 9 et un trou 5 destiné à recevoir l'arbre absorbeur du dispositif, le trou 5 et la cavité de freinage 9 étant séparés par un pontet 10.

Le trou 5 est composé d'un logement central 6, discoïdal, et de deux zones d'amorces de cassure, supérieure 7 et inférieure 8, qui amincissent le pontet 10 localement. Le logement central 6 a un diamètre sensiblement égal à celui de l'arbre absorbeur. Les zones d'amorce de cassure 7 et 8 sont en forme de portion de disque, dont les centres 7' et 8' sont localisés en périphérie du logement central 6. Les centres 7' et 8' des zones d'amorce de cassure forment avec le centre 6' du logement central un angle α environ égal à 100°.

Le pontet 10 est plus mince au niveau de la zone d'amorce de cassure supérieure 7 qu'au niveau de la zone d'amorce de cassure inférieure 8, de sorte que le pontet 10 casse de préférence au niveau de la zone d'amorce de cassure supérieure 7.

La cavité de freinage 9 comporte une cavité centrale 11, sous laquelle se trouve une zone de stockage 12 destinée à recevoir la partie du pontet rompu. D'un côté de la cavité centrale 11 se trouve le pontet 10 et de l'autre côté se trouve une zone déformable 13 allongée suivant un axe de référence 14 courbe. La zone déformable a une largeur I légèrement inférieure à celle de l'arbre absorbeur. L'axe de référence est courbe, et les parois latérales 15a et 15b de la zone déformable sont également courbes, de même courbure que l'axe de référence 14. Par ailleurs, le centre du logement central 6' est également situé sur l'axe de référence 14. La paroi 15 de la cavité de freinage, qui sépare la cavité de freinage du pontet, est convexe et elle est perpendiculaire à l'axe de référence 14, tandis que la paroi 16 de la cavité de freinage qui est à l'extrémité de la zone déformable est concave. La paroi 16 de la cavité de freinage est également perpendiculaire à l'axe de référence 14.

La figure 2 représente une articulation de siège d'avion comportant le dispositif d'absorption 1 dont la plaque 2 est représentée en figure 1. Le siège comporte une structure fixe 18 sur laquelle est fixé un arbre de pivotement 19. Une bielle 20 est placée, de chaque côté du siège, en rotation autour de l'arbre de pivotement 19. Entre les deux bielles 20, se trouve un dossier fixe 20' solidaire des bielles 20. L'axe absorbeur 17 du dispositif 1 est fixé à la structure fixe 18. La plaque 2 du dispositif est reliée à la bielle 20 par l'intermédiaire des deux orifices de fixation 3 et 3', de sorte que la plaque 2 est solidaire de la bielle 20.

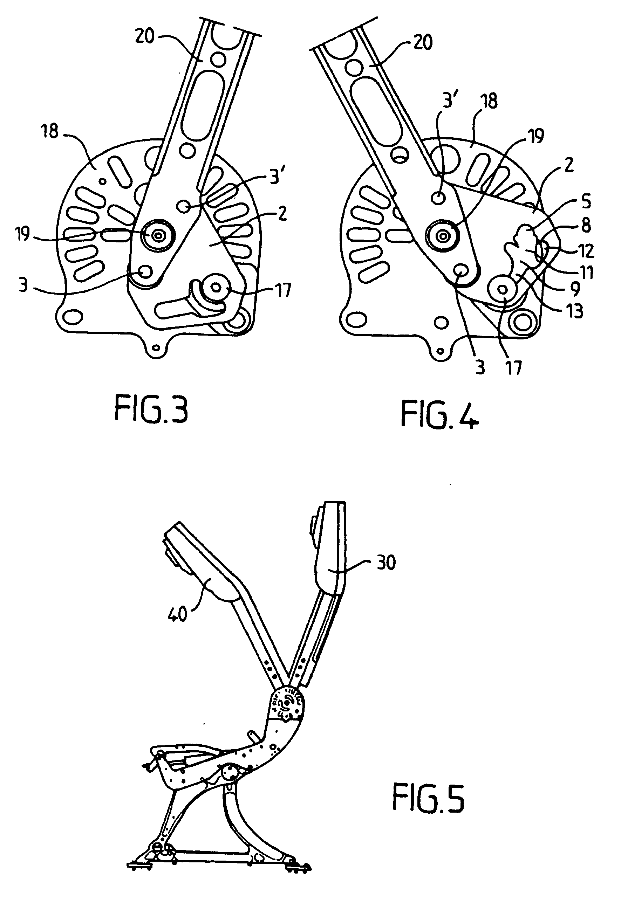

La figure 3 représente l'articulation de la figure 2 en l'absence de choc. Dans cette configuration, l'arbre absorbeur 17 est dans le trou 5 de la plaque 2, ce qui empêche l'ensemble plaque/dossier de pivoter autour de l'arbre de pivotement 19. Le dossier est alors maintenu dans la position désignée par 30 sur la figure 5.

Suite à un choc, provoquant sur le pontet 10 un effort supérieur à une valeur seuil prédéterminée, le pontet 10 se rompt, au niveau de la zone d'amorce de cassure supérieure 7. Le pontet 10 cassé se plie alors au niveau de la zone d'amorce de cassure inférieure 8 et il vient se loger dans la zone de stockage 12 de la cavité de freinage 9, comme représenté sur la figure 4. L'ensemble plaque/dossier n'est plus retenu par l'arbre absorbeur 17 et il peut alors pivoter autour de l'arbre de pivotement 19. Dans un premier temps, la rotation de l'ensemble plaque/dossier est libre puisque l'arbre absorbeur n'est plus retenu par le pontet et il se trouve au niveau de la cavité centrale 11 de la cavité de freinage. Ensuite, l'arbre absorbeur 17 rencontre la zone déformable 13, ce qui freine la rotation de l'ensemble plaque/dossier puisque l'énergie cinétique de la rotation est utilisée pour déformer la zone déformable 13 afin que l'arbre absorbeur 17 puisse pénétrer dans la zone déformable 13. Enfin l'arbre absorbeur 17 rencontre la paroi 16 de la cavité de freinage contre laquelle il vient en butée, ce qui met un terme à la rotation de l'ensemble plaque/dossier autour de l'arbre de pivotement 19. L'articulation se trouve alors dans la configuration représentée sur la figure 4 et le dossier se trouve dans la configuration représentée en 40 sur la figure 5. Ainsi, après un choc, le dossier est incliné vers l'avant d'un angle environ égal à 45°.

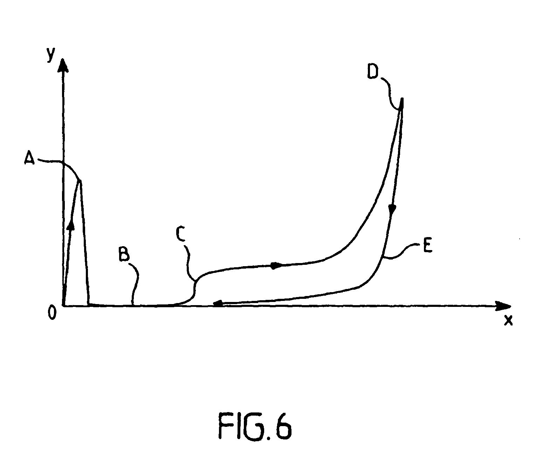

Les efforts exercés sur le dossier lors d'un choc sont représentés sur la figure 6. L'axe des ordonnées représente les efforts exercés sur le dossier en fonction de l'inclinaison du dossier, représentée par l'axe des abscisses. Le choc a lieu en 0. Dans un premier temps, les efforts augmentent, sans que l'inclinaison du siège n'évolue de manière significative. En A, les efforts exercés sur le pontet dépasse la valeur prédéterminée, ce qui provoque la rupture du pontet et une relaxe des efforts. Puis l'ensemble plaque/dossier pivote de manière significative, en B, car sa rotation n'est plus entravée par l'arbre absorbeur. Cette rotation se poursuit jusqu'à ce que l'arbre absorbeur rencontre la zone déformable, en C, ce qui provoque une augmentation des efforts exercés sur le dossier puisque l'arbre absorbeur déforme la zone déformable pour permettre la poursuite de l'inclinaison du dossier. Le dossier continue à s'incliner jusqu'au point D où l'arbre absorbeur arrive à l'extrémité de la zone déformable, ce qui arrête la rotation de l'ensemble plaque/dossier et donc du dossier.

Pour remettre le dossier en position initiale, il suffit de le pousser manuellement. Cette rotation du dossier en sens inverse se fait quasiment sans effort comme on peut le voir en E puisque la zone déformable est déjà déformée et donc que sa largeur s'est agrandie.

Naturellement d'autres variantes sont possibles. Par exemple, la plaque et la bielle peuvent ne former qu'une seule pièce, ce qui permet de simplifier le montage de l'articulation. Par contre, ce mode de réalisation a le désavantage de ne pas permettre le réglage de l'inclinaison de la plaque par rapport à la bielle, ce qui peut être utile pour rattraper les jeux de fabrication. Par ailleurs, la cavité centrale peut être plus ou moins étendue en fonction de l'inclinaison voulue pour le dossier. De même, la zone déformable peut être plus ou moins longue en fonction de l'inclinaison et de la vitesse d'amortissement voulues.

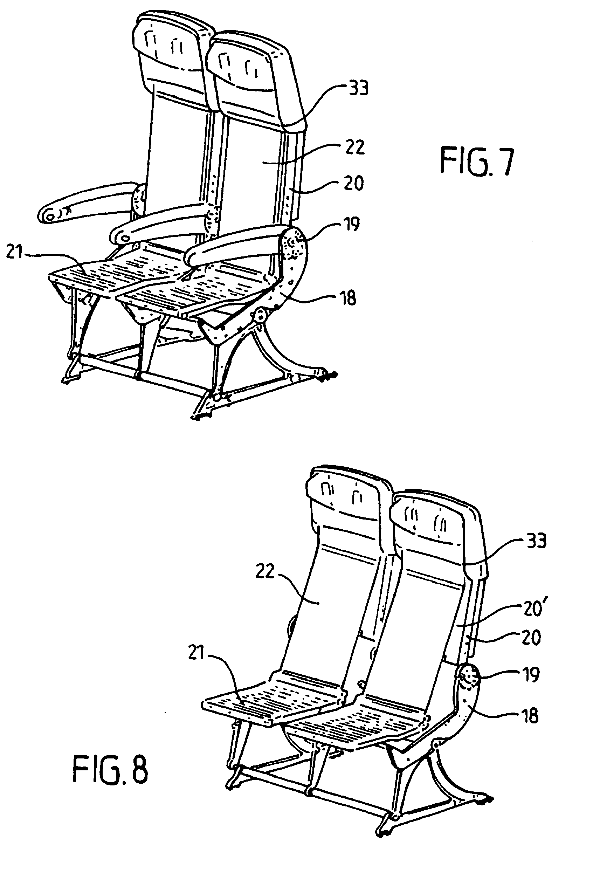

Selon un autre mode de réalisation, représenté sur les figures 7 à 12, le siège comporte également une structure fixe 18 sur laquelle est reliée une bielle 20 par l'intermédiaire d'un arbre de pivotement 19 et d'un dispositif 1 semblable à celui décrit précédemment. Les éléments identiques ou similaires sont repérés par des signes de référence identiques et l'on se réfèrera utilement à la description qui précède pour ces éléments identiques.

Le siège de ce mode de réalisation comporte en outre une assise mobile 21 située sur la structure fixe 18 et pouvant glisser longitudinalement sur cette structure fixe 18, ainsi qu'un dossier mobile 22 relié au dossier fixe 20' et à l'assise mobile 21 et dont l'inclinaison est variable comme on peut le voir sur les figures 7 et 8. Le passager peut en effet choisir l'inclinaison du dossier mobile 22 par rapport à l'assise mobile 21 en fonctionnement normal. Les moyens permettant au passager de régler simultanément l'inclinaison du dossier mobile 22 et la translation de l'assise 21 sont réalisés par un vérin 23 avec verrouillage situé entre le dessous de l'assise 21 et la structure fixe 18.

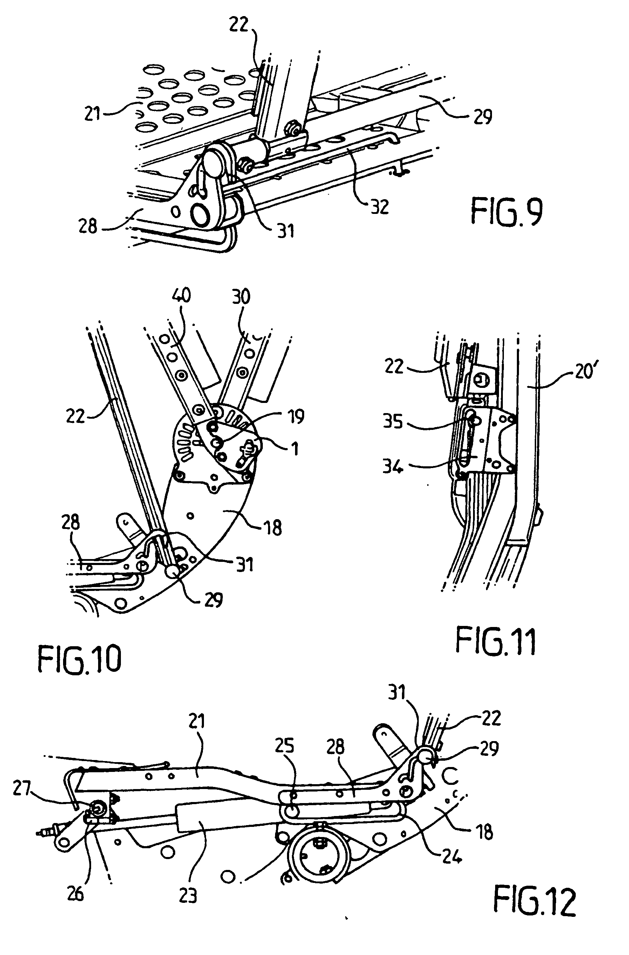

La liaison entre l'assise mobile 21 et la structure fixe 18 est représentée sur la figure 12. L'assise mobile 21 est reliée à l'avant de la structure fixe 18 par un oblong 26 solidaire de l'assise mobile 21 dans lequel glisse un patin 27 solidaire de la structure fixe. Par ailleurs l'arrière de l'assise mobile 21 comprend également un oblong 24 dans lequel roule un galet 25 de la structure fixe. Un vérin de positionnement 23 permet de translater longitudinalement l'assise mobile 21 par rapport à la structure fixe 18.

La liaison entre le dossier mobile 22 et l'assise mobile 21 est représentée sur les figures 9, 10 et 12. Une chape 28, comportant un logement 31 ouvert sur sa partie inférieure, de sorte qu'il a une forme de crochet, est reliée à l'assise 21. Un arbre libérable 29 solidaire du dossier mobile 22 est logé dans ce logement ouvert 31, dans lequel il peut pivoter. Ainsi l'inclinaison du dossier mobile 22 par rapport à l'assise 21 est variable. Un ressort de torsion 32 maintient l'arbre libérable dans le logement ouvert 31 en fonctionnement normal. Ce ressort 32 s'étend transversalement entre l'arbre libérable 29 et la structure fixe 18 et il a une forme de Z.

Par ailleurs, le dossier mobile 22 est relié au dossier fixe 20' par un galet 35 solidaire du dossier mobile 22 qui roule dans un oblong 34 solidaire du dossier fixe 20'. Cette liaison permet le déplacement vertical du dossier mobile 22 par rapport au dossier fixe 20'.

Lorsque le dispositif absorbeur de choc 1 se déclenche et permet au dossier fixe 20' de passer de la position 30 à la position 40, comme représenté sur la figure 10, le dossier fixe 20' appuie sur le dossier mobile 22 sur le sommet du oblong et le dossier mobile 22 coulisse vers le bas. L'arbre libérable 29 coulisse donc également vers le bas si bien que l'effort exercé par le dossier fixe 20' sur le dossier mobile 22 permet à l'arbre libérable 29 de sortir de la chape ouverte 28, malgré la présence du ressort 32. Cette articulation entre le dossier mobile et le dossier fixe permet donc au dispositif 1 de fonctionner, même en présence d'un dossier à inclinaison variable.

## Revendications

1. Dispositif d'absorption de choc, comprenant une plaque (2) et un arbre absorbeur (17), la plaque (2) comportant une cavité de freinage (9) et un trou (5) au travers duquel passe l'arbre absorbeur (17), le trou (5) et la cavité de freinage (9) étant séparés par un pontet (10), le dispositif d'absorption de choc étant **caractérisé en ce que**:
- le trou (5) comporte un logement central (6) dans lequel se trouve l'arbre absorbeur (17) et deux zones d'amorce de cassure, supérieure (7) et inférieure (8), venant amincir localement le pontet (10), le pontet (10) étant plus mince au niveau de l'une des deux zones d'amorce de cassure (7, 8),
- le pontet (10) est dimensionné pour rompre au niveau de la zone d'amorce la plus mince lorsque l'arbre absorbeur (17) exerce sur lui un effort supérieur à une valeur prédéterminée, et
- la cavité de freinage (9) comporte une cavité centrale (11), une zone de stockage (12) destinée à recevoir le pontet (10) rompu et une zone déformable (13) allongée suivant un axe de référence (14) et présentant une largeur (I) inférieure au diamètre de l'arbre absorbeur (17), la zone déformable (13) étant destinée à recevoir l'arbre absorbeur (17) une fois le pontet (10) rompu.

2. Dispositif d'absorption de choc selon la revendication 1, **caractérisé en ce que** la plaque (2) est en aluminium.

3. Dispositif d'absorption de choc selon l'une quelconque des revendications précédentes, **caractérisé en ce que** le pontet (10) est plus mince au niveau de la zone d'amorce de cassure supérieure (7) qu'au niveau de la zone d'amorce de cassure inférieure (8).

4. Dispositif d'absorption de choc selon l'une quelconque des revendications précédentes, **caractérisé en ce que** l'axe de référence (14) est courbe.

5. Dispositif d'absorption de choc selon l'une quelconque des revendications précédentes, **caractérisé en ce que** la zone déformable (13) est courbe et elle a une longueur et une courbure telle qu'elle permet au dossier de s'incliner d'un angle compris entre 40° et 50°.

6. Dispositif d'absorption de choc selon l'une quelconque des revendications précédentes, **caractérisé en ce que** la zone déformable (13) a une largeur (I) comprise entre 80% et 98% du diamètre de l'arbre absorbeur (17).

7. Dispositif d'absorption de choc selon l'une quelconque des revendications précédentes, **caractérisé en ce que** la zone déformable (13) a une largeur (I) décroissante lorsque l'on s'éloigne du pontet (10) en suivant l'axe de référence (14).

8. Dispositif d'absorption de choc selon l'une quelconque des revendications précédentes, **caractérisé en ce que** le logement central (6) est en forme de disque de diamètre sensiblement égal à celui de l'arbre absorbeur (17).

9. Dispositif d'absorption de choc selon la revendication précédente, **caractérisé en ce que** le logement central présente un centre (6') situé sur l'axe de référence (14), les deux zones d'amorce de cassure (7, 8) comportant chacune un centre (7', 8') de courbure situé en périphérie du logement central (6), les deux centres (7', 8') étant séparés d'un angle (α) compris entre 80° et 120° par rapport au centre (6') du logement central (6).

10. Dispositif d'absorption de choc selon l'une quelconque des revendications précédentes, **caractérisé en ce que** chaque zone d'amorce de cassure (7, 8) est concave, de concavité tournée vers le logement central (6).

11. Dispositif d'absorption de choc selon l'une quelconque des revendications précédentes, **caractérisé en ce qu'**il comporte en outre des moyens de fixation (3, 3') sur une pièce fixe.

12. Dispositif d'absorption de choc selon l'une quelconque des revendications précédentes, **caractérisé en ce qu'**il comporte en outre des moyens d'ajustement de l'inclinaison (3, 3') du dispositif d'absorption par rapport à la pièce à laquelle il est fixé.

13. Siège pour véhicule comportant une structure fixe (18), un arbre de pivotement (19) fixé sur la structure fixe (18) et un dossier (20') en liaison pivot autour de l'arbre de pivotement (19), **caractérisé en ce qu'**il comporte au moins un dispositif absorbeur selon l'une quelconque des revendications précédentes.

14. Siège pour véhicule selon la revendication précédente, **caractérisé en ce que** la plaque (2) est solidaire du dossier, l'arbre absorbeur (17) étant relié à la structure fixe (18).

15. Siège selon l'une quelconque des revendications 13 ou 14, **caractérisé en ce que** le dossier comporte au moins une bielle (20) dont une extrémité est en liaison pivot autour de l'arbre de pivotement (19), la plaque étant reliée à la bielle (20).

16. Siège selon l'une quelconque des revendications 13 à 15, **caractérisé en ce que** le siège comporte en outre une assise (21) pouvant translater longitudinalement par rapport à la structure fixe (18) et un dossier mobile (22) en liaison linéaire annulaire par rapport au dossier (20'), le dossier mobile (22) étant en outre en liaison pivot autour d'un arbre libérable (29) par rapport à l'assise (21), la liaison pivot entre l'assise (21) et le dossier mobile (22) étant réalisée par une chape ouverte (28) solidaire de l'assise dans laquelle pivote l'arbre libérable (29), la chape ouverte (28) étant fermée par un ressort de torsion (32) libérant l'arbre libérable (29) de la chape lorsque l'arbre absorbeur (17) sort du trou (5).

17. Siège selon la revendication précédente, **caractérisé en ce que** la liaison linéaire annulaire entre le dossier mobile (22) et le dossier (20') est réalisée par un galet (35) solidaire du dossier mobile (22) qui coulisse dans un oblong (34) solidaire du dossier (20').

18. Siège selon l'une quelconque des revendications 16 ou 17, **caractérisé en ce qu'**il comporte en outre un vérin (23), relié à l'assise (21) et à la structure fixe (18), permettant de régler simultanément l'inclinaison du dossier mobile (22) et la translation de l'assise (21).

## Claims

1. Shock-absorbing device, comprising a plate (2) and an absorbing shaft (17), the plate (2) comprising a braking cavity (9) and a hole (5) through which the absorbing shaft (17) passes, the hole (5) and the braking cavity (9) being separated by a bridge (10), the shock-absorbing device being **characterised in that**:
- the hole (5) comprises a central receiver (6), in which the absorbing shaft (17) is located, and two fracture initiation zones, an upper fracture initiation zone (7) and a lower fracture initiation zone (8), which make the bridge (10) locally thinner, the bridge (10) being thinner in the region of one of the two fracture initiation zones (7, 8),
- the bridge (10) is of such a size that it breaks in the region of the thinnest initiation zone when the absorbing shaft (17) exerts thereon a force greater than a predetermined value, and
- the braking cavity (9) comprises a central cavity (11), a storage zone (12) for receiving the broken bridge (10), and a deformable zone (13) which is elongated along a reference axis (14) and has a width (I) smaller than the diameter of the absorbing shaft (17), the deformable zone (13) being intended to receive the absorbing shaft (17) once the bridge (10) has broken.

2. Shock-absorbing device according to claim 1, **characterised in that** the plate (2) is made of aluminium.

3. Shock-absorbing device according to any one of the preceding claims, **characterised in that** the bridge (10) is thinner in the region of the upper fracture initiation zone (7) than in the region of the lower fracture initiation zone (8).

4. Shock-absorbing device according to any one of the preceding claims, **characterised in that** the reference axis (14) is curved.

5. Shock-absorbing device according to any one of the preceding claims, **characterised in that** the deformable zone (13) is curved and it has a length and a curvature such that it allows the seat back to be inclined at an angle of from 40° to 50°.

6. Shock-absorbing device according to any one of the preceding claims, **characterised in that** the deformable zone (13) has a width (I) of from 80% to 98% of the diameter of the absorbing shaft (17).

7. Shock-absorbing device according to any one of the preceding claims, **characterised in that** the deformable zone (13) has a width (I) which decreases in a direction away from the bridge (10) along the reference axis (14).

8. Shock-absorbing device according to any one of the preceding claims, **characterised in that** the central receiver (6) is in the form of a disc having a diameter substantially equal to that of the absorbing shaft (17).

9. Shock-absorbing device according to the preceding claim, **characterised in that** the central receiver has a centre (6') situated on the reference axis (14), the two fracture initiation zones (7, 8) each comprising a centre (7', 8') of curvature which is situated on the periphery of the central receiver (6), the two centres (7', 8') being separated by an angle (α) of from 80° to 120° relative to the centre (6') of the central receiver (6).

10. Shock-absorbing device according to any one of the preceding claims, **characterised in that** each fracture initiation zone (7, 8) is concave, the concavity facing the central receiver (6).

11. Shock-absorbing device according to any one of the preceding claims, **characterised in that** it further comprises means (3, 3') for fixing to a fixed member.

12. Shock-absorbing device according to any one of the preceding claims, **characterised in that** it further comprises means (3, 3') for adjusting the inclination of the absorbing device relative to the member to which it is fixed.

13. Vehicle seat comprising a fixed structure (18), a pivot shaft (19) fixed to the fixed structure (18), and a seat back (20') in pivoting connection about the pivot shaft (19), **characterised in that** it comprises at least one absorbing device according to any one of the preceding claims.

14. Vehicle seat according to the preceding claim, **characterised in that** the plate (2) is integral with the seat back, the absorbing shaft (17) being connected to the fixed structure (18).

15. Seat according to either claim 13 or claim 14, **characterised in that** the seat back comprises at least one connecting rod (20) of which one end is in pivoting connection about the pivot shaft (19), the plate being connected to the connecting rod (20).

16. Seat according to any one of claims 13 to 15, **characterised in that** the seat further comprises a seat base (21) which is able to translate longitudinally relative to the fixed structure (18), and a movable seat back (22) which is in annular linear connection relative to the seat back (20'), the movable seat back (22) further being in pivoting connection about a releasable shaft (29) relative to the seat base (21), the pivoting connection between the seat base (21) and the movable seat back (22) being provided by an open fork joint (28) which is integral with the seat base and in which the releasable shaft (29) pivots, the open fork joint (28) being closed by a torsion spring (32) which releases the releasable shaft (29) from the fork joint when the absorbing shaft (17) leaves the hole (5).

17. Seat according to the preceding claim, **characterised in that** the annular linear connection between the movable seat back (22) and the seat back (20') is provided by a roller (35) which is integral with the movable seat back (22) and slides in an oblong member (34) integral with the back (20').

18. Seat according to either claim 16 or claim 17, **characterised in that** it further comprises a jack (23) which is connected to the seat base (21) and to the fixed structure (18) and allows the inclination of the movable seat back (22) and the translation of the seat base (21) to be adjusted simultaneously.

## Patentansprüche

1. Stoßdämpfungsvorrichtung mit einer Platte (2) und einer Dämpfungswelle (17), wobei die Platte (2) eine Bremsausnehmung (9) und ein Loch (5) aufweist, durch welches eine Dämpfungswelle (17) hindurchgeht, das Loch (5) und die Bremsausnehmung (9) durch einen Steg (10) voneinander getrennt sind, **dadurch gekennzeichnet, dass**
- das Loch (5) eine zentrale Aufnahme (6) aufweist, in welcher sich die Dämpfungswelle (17) und zwei Sollbruchzonen, eine obere (7) und eine untere (8), befinden, welche den Steg (10) örtlich dünner machen, wobei der Steg (10) an einer der zwei Sollbruchzonen (7, 8) dünner ist,
- der Steg (10) bemessen ist, um an der dünnsten Sollbruchzone zu brechen, wenn die Dämpfungswelle (17) auf sie eine Belastung ausübt, die größer ist als ein vorbestimmter Wert, und
- die Bremsausnehmung (9) eine zentrale Ausnehmung (11) aufweist, eine Speicherzone (12), die dazu bestimmt ist, den gebrochenen Steg (10) aufzunehmen, und eine in Richtung einer Bezugsachse (14) verformbare, längliche Zone (13), die eine Breite (I) aufweist, welche kleiner als der Durchmesser der Dämpfungswelle (17) ist, wobei die verformbare Zone (13) dazu bestimmt ist, die Dämpfungswelle (17) aufzunehmen, wenn der Steg (10) gebrochen ist.

2. Stoßdämpfungsvorrichtung nach Anspruch 1, **dadurch gekennzeichnet, dass** die Platte (2) aus Aluminium besteht.

3. Stoßdämpfungsvorrichtung nach einem der vorherigen Ansprüche, **dadurch gekennzeichnet, dass** der Steg (10) an der oberen Sollbruchzone (7) dünner als an der unteren Sollbruchzone (8) ist.

4. Stoßdämpfungsvorrichtung nach einem der vorhergehenden Ansprüche, **dadurch gekennzeichnet, dass** die Bezugsachse (14) gekrümmt ist.

5. Stoßdämpfungsvorrichtung nach einem der vorhergehenden Ansprüche, **dadurch gekennzeichnet, dass** die verformbare Zone (13) gekrümmt ist und eine Länge und eine Krümmung derart hat, dass der Rücklehne gestattet wird, sich um einen Winkel zwischen 40° und 50° zu neigen.

6. Stoßdämpfungsvorrichtung nach einem der vorhergehenden Ansprüche, **dadurch gekennzeichnet, dass** die verformbare Zone (13) eine Breite (I) zwischen 80 % und 98 % des Durchmessers der Dämpfungswelle (17) hat.

7. Stoßdämpfungsvorrichtung nach einem der vorhergehenden Ansprüche, **dadurch gekennzeichnet, dass** die verformbare Zone (13) eine Breite (I) hat, die abnimmt, wenn man sich von dem Steg (10) in Richtung der Bezugsachse (14) entfernt.

8. Stoßdämpfungsvorrichtung nach einem der vorhergehenden Ansprüche, **dadurch gekennzeichnet, dass** die zentrale Aufnahme (6) die Form einer Scheibe mit einem Durchmesser hat, der im Wesentlichen gleich dem der Dämpfungswelle (17) ist.

9. Stoßdämpfungsvorrichtung nach dem vorhergehenden Anspruch, **dadurch gekennzeichnet, dass** die die zentrale Aufnahme (6) einen Mittelpunkt (6') aufweist, der auf der Bezugsachse (14) liegt, wobei die zwei Sollbruchzonen (7, 8) jede einen Krümmungsmittelpunkt (7', 8') aufweisen, der am Umfang der zentralen Aufnahme (6) liegt, und die zwei Mittelpunkte (7', 8') durch einen Winkel (α) zwischen 80° und 120° bezüglich des Mittelpunktes (6') der zentralen Aufnahme (6) getrennt sind.

10. Stoßdämpfungsvorrichtung nach einem der vorhergehenden Ansprüche, **dadurch gekennzeichnet, dass** jede Sollbruchzone (7, 8) konkav ist, wobei die Konkavität zu der zentralen Aufnahme (6) hin gerichtet ist.

11. Stoßdämpfungsvorrichtung nach einem der vorhergehenden Ansprüche, **dadurch gekennzeichnet, dass** sie ferner Befestigungsmittel (3, 3') auf einem festen Teil aufweist.

12. Stoßdämpfungsvorrichtung nach einem der vorhergehenden Ansprüche, **dadurch gekennzeichnet, dass** sie ferner Anpassungsmittel für die Neigung (3, 3') der Dämpfungsvorrichtung bezüglich dem Stück, an welchem sie befestigt ist, aufweist.

13. Fahrzeugsitz mit einem festen Aufbau (18), einer Schwenkwelle (19), die an dem festen Aufbau (18) befestigt ist, und einer Rückenlehne (20') in Schwenkverbindung um die Schwenkwelle (19) herum, **dadurch gekennzeichnet, dass** er mindestens eine Dämpfungsvorrichtung nach einem der vorhergehenden Ansprüche aufweist.

14. Fahrzeugsitz nach dem vorhergehenden Anspruch, **dadurch gekennzeichnet, dass** die Platte (2) mit der Rückenlehne fest verbunden ist, wobei die Dämpfungswelle (17) mit dem festen Aufbau (18) verbunden ist.

15. Sitz nach einem der Ansprüche 13 oder 14, **dadurch gekennzeichnet, dass** die Rückenlehne mindestens eine Schubstange (20) aufweist, deren eines Ende sich in Schwenkverbindung um die Schwenkwelle (19) herum befindet, wobei die Platte mit der Schubstange (20) verbunden ist.

16. Sitz nach einem der Ansprüche 13 bis 15, **dadurch gekennzeichnet, dass** der Sitz ferner eine Auflage (21) aufweist, die sich längs bezüglich des festen Aufbaus (18) verlagern kann, und eine mobile Rückenlehne (22), die sich bezüglich der Rückenlehne (20') in linearer, ringförmiger Verbindung befindet, wobei sich die mobile Rückenlehne (22) ferner in Schwenkverbindung um eine lösbare Welle (29) bezüglich der Auflage (21) befindet, die Schwenkverbindung zwischen der Auflage (21) und der mobilen Rückenlehne (22) durch eine offene Abdeckung (28) realisiert wird, die mit der Auflage, in welcher die lösbare Welle (29) schwenkt, fest verbunden ist, wobei die offene Abdeckung durch eine Torsionsfeder (32) geschlossen ist, welche die lösbare Welle (29) aus der Abdeckung frei gibt, wenn die Dämpfungswelle (17) aus dem Loch (5) heraustritt.

17. Sitz nach dem vorhergehenden Anspruch, **dadurch gekennzeichnet, dass** die lineare, ringförmige Verbindung zwischen der mobilen Rückenlehne (22) und der Rückenlehne (20') durch eine mit der mobilen Rückenlehne (22) fest verbundenen Rolle (35) realisiert ist, welche in einem mit der Rückenlehne (20') fest verbundenen, länglichen Teil (34) gleitet.

18. Sitz nach einem der Ansprüche 16 oder 17, **dadurch gekennzeichnet, dass** er ferner einen Stellantrieb (23) aufweist, der mit der Auflage (21) und dem festen Aufbau (18) verbunden ist und es erlaubt, gleichzeitig die Neigung der mobilen Rückenlehne (22) und die Verlagerung der Auflage (21) einzustellen.
